# EUROPEAN PATENT APPLICATION

(11) **EP 4 496 172 A1**
(43) Date of publication of application: **22.01.2025**
(21) Application number: 24180890.6
(22) Date of filing: 07.06.2024
(51) Int. Cl.: H02J 7/00, H01M 10/44, H01M 10/48, H02J 7/34, H02J 15/00

(54) **ENERGY STORAGE MODULE WITH TEMPERATURE BASED CELL VOLTAGE CONTROL FOR HIGH-POWER APPLICATIONS**

(30) Priority: 02.07.2023 DE 102023117427
(71) Applicant: Skeleton Technologies GmbH, 01900 Grossröhrsdorf (DE)
(72) Inventor: PILLE, Siim, 01900 Großröhrsdorf (DE); HAMIDI, Roberto, 01900 Großröhrsdorf (DE)
(74) Representative: KASTEL Patentanwälte PartG mbB

(57) **Abstract**

In order to improve the lifetime of energy storage modules (20) based on supercapacitor cells (24) that are used in high-power applications, the invention proposes that the cell voltage (V_{cell}) of the supercapacitor cells (24) is adjusted based on a detected cell temperature (T_{cell}).

## Description

The invention relates to an energy storage module for supplying power to an electrical load. The invention further relates to a starter system for a mechanical load, such as an engine, and an operating method for the energy storage module.

Energy storage modules based on supercapacitors are becoming more and more popular in various applications. One such application is, for example, supplying electrical starter motors of larger engines instead of using conventional lead acid batteries. Supercapacitors can be easily charged and are able to provide a large peak power for a short amount of time, which is ideal for starter motors.

While the known energy storage modules are typically sufficient for the task, it was noticed that the performance of the supercapacitors and hence the performance of the energy storage modules may suffer, in particular due to temperature variations.

It is the object of the invention to improve supercapacitor based energy storage modules, in particular to reduce the risk of degradation and/or to improve lifetime.

The object is achieved by the subject-matter of the independent claims. Preferred embodiments are subject-matter of the dependent claims.

The invention provides an energy storage module for supplying power to an electrical load, the module comprising:
- an energy storage assembly comprising a plurality of supercapacitor cells for storing electrical energy;
- a sensor apparatus that includes at least one temperature sensor arranged to detect a cell temperature of at least one of the supercapacitor cells; and
- a controller that is configured to adjust a cell voltage of the supercapacitor cells based on the detected cell temperature.

The inventors have found that changing the cell voltage based on the cell temperature may reduce degradation of the supercapacitor cells, e.g., the active material and electrolyte. Usually, the materials in the supercapacitor cells degrade with higher temperatures. Furthermore, the inventors found that changing the cell voltage may counteract the degradation.

It is believed - without being bound to this explanation - that the change of capacitance of the supercapacitor cells due to thermal variations is a factor. If the cell temperature changes, so usually does the capacitance. In case of a temperature increase the electrodes expand as well. The expanded electrodes have a larger surface area, which is a more important effect compared to the change in distance between opposite electrodes. As a result, an increase in capacitance can be expected. This can be aggravated, if the distance between opposite electrodes shrinks due to thermal expansion of the electrodes, which for some electrode configurations is possible.

If the capacitance fluctuates due to temperature variations and the cell voltage is maintained constant, as is done conventionally, then the charge within the supercapacitor cells has to change to compensate for the change in capacitance. As a result, maintaining the cell voltage is expected to permanently cause small charging and discharging cycles of the supercapacitor cells; this is believed to be a factor in the degradation.

The idea is now to adjust the cell voltage depending on the cell temperature with the aim to reduce these fluctuations. It is noted that this is not a strict proportionality or that is necessary to follow any changes exactly. Rather, it is sufficient to adjust the cell voltage in general in response to a changing cell temperature.

Preferably, the controller is configured to decrease the cell voltage, when the cell temperature increases, and/or to increase the cell voltage, when the cell temperature decreases. In general it was found to be beneficial to decrease the cell voltage, if the cell temperature increases and to increase the cell voltage, if the cell temperature decreases.

Preferably, the controller is configured to adjust, increase, and/or decrease any of the cell voltage, the first threshold, and/or the second threshold in accordance with a predetermined control curve that is indicative of the dependence of the cell voltage on the cell temperature. Preferably, any of the cell voltage, the first threshold and/or the second threshold are adjusted using a look-up table or PID-controller. A PID controller is a simple and readily available solution. A suitable dependence of the cell voltage on the cell temperature can be found experimentally or based on a model of the cell. The results can be stored in a look-up table which allows a simpler implementation of non-linear dependencies.

Preferably, the controller is configured to decrease the cell voltage, when the cell temperature exceeds a first threshold and/or to increase the cell voltage, when the cell temperature falls below a second threshold that is smaller than the first threshold. In a simple case, there can be discrete voltage set points that can be adjusted with thresholds.

Preferably, the controller is configured to decrease the cell voltage by a predetermined decrement and/or to increase the cell voltage by a predetermined increment. Preferably, the predetermined decrement is proportional to the first threshold and/or the predetermined increment is proportional to the second threshold. It is possible to change the cell voltage in discrete steps based on different thresholds, and the change may depend on the threshold. This can help to approximate non-linear dependencies.

Preferably, the controller is configured to dynamically adjust the first threshold and/or the second threshold based on the cell temperature, an environmental temperature outside the energy storage module, and/or a housing temperature within an interior space defined by a housing. The thresholds can be dynamically adjusted depending on different temperature data, thereby allowing an improved compensation of temperature variations.

Preferably, the controller is configured to decrease the voltage during a daytime period and/or to increase the voltage during a nighttime period, preferably by a predetermined voltage decrement or voltage increment. The cell voltage may be adjusted according to a predetermined time cycle.

Preferably, the controller is configured to monitor the cell voltage of at least one supercapacitor cell and causes the supercapacitor cell to be charged, when the cell voltage falls below a predetermined voltage level. With this an exhaustive discharge of the cells can be prevented.

Preferably, the controller is configured to measure a voltage drop during supplying the electrical load with power from the supercapacitor cells, and to increase the cell voltage, when the voltage drop exceeds a predetermined threshold. With this an exhaustive discharge can be prevented and enough power is supplied to the electrical load.

Preferably, at least one supercapacitor cell is electrically connected to a load balancing resistor, wherein the controller is configured to selectively discharge the supercapacitor cell via the balancing resistor. Since the cells are between them not identical, load balancing is performed.

Preferably, the module further comprises a power source, preferably a battery, that is electrically connected to the supercapacitor cells, and the controller is configured to control charging of the supercapacitor cells from the power source. The power source can be spared peak current loads by letting the supercapacitor cells handle it.

Preferably, the module further comprises a power converter, preferably an AC/DC converter or a DC/DC converter, that is electrically connected between the power source and the supercapacitor cells, and the controller is configured to control the power converter for charging the supercapacitor cells from the power source and/or for discharging the supercapacitor cells to the power source. Depending on the power source, the input power can be converted to suit the supercapacitor cells.

The invention provides a starter system for starting a mechanical load, preferably an engine, the system comprising an energy storage module according to any of the preceding claims and an electrical starter motor configured to start the mechanical load, wherein the starter motor is electrically coupled to the energy storage module as the electrical load.

The starter motor usually needs high currents for functioning. The energy storage module is able to provide those currents, while being able to relieve the power source.

Preferably, the controller is configured to decrease the cell voltage, when the mechanical load is in an active state, and/or to increase the cell voltage, when the mechanical load is in an inactive state.

The invention provides a method for operating, preferably a previously described, energy storage module, the method comprising:
- storing electrical energy in a plurality of supercapacitor cells;
- detecting a cell temperature of at least one supercapacitor cell by at least one temperature sensor; and
- adjusting a cell voltage of the supercapacitor cells based on the detected cell temperature by a controller.

Preferably, the controller decreases the cell voltage, when the temperature sensor detects that the cell temperature increases. Preferably, the controller increases the cell voltage, when the temperature sensor detects that the cell temperature decreases.

Preferably, the controller decreases the cell voltage, when the cell temperature exceeds a first threshold and/or increases the cell voltage, when the cell temperature falls below a second threshold that is smaller than the first threshold.

Preferably, the controller decreases the cell voltage by a predetermined decrement and/or increases the cell voltage by a predetermined increment. Preferably, the predetermined decrement is proportional to the current value of the first threshold and/or the predetermined increment is proportional to the current value of the second threshold.

Preferably, the controller dynamically adjusts the first threshold and/or the second threshold based on the cell temperature, an environmental temperature outside the energy storage module, and/or a housing temperature within an interior space defined by a housing.

Preferably, the controller decreases the cell voltage during a daytime period and/or increases the cell voltage during a nighttime period, preferably by a predetermined voltage decrement or voltage increment.

Preferably, the controller monitors the cell voltage of at least one supercapacitor cell and causes the supercapacitor cell to be charged, when its cell voltage falls below a predetermined voltage level.

Preferably, the controller measures a voltage drop during supplying the electrical load with power from the supercapacitor cells, and increases the cell voltage, when the voltage drop exceeds a predetermined threshold.

Preferably, the controller selectively discharges supercapacitor cell via a balancing resistor.

Preferably, the controller controls charging of the supercapacitor cells from a power source, preferably a battery.

Preferably, the controller to controls a power converter, preferably an AC/DC converter or a DC/DC converter, to cause charging the supercapacitor cells from the power source and/or to cause discharging the supercapacitor cells to the power source.

The invention provides a method for operating a starter system for starting a mechanical load, preferably an engine, the method comprising performing a previously described method; supplying a starter motor that is operatively coupled to the mechanical load with electrical power from the supercapacitor cells.

Preferably, the controller decreases the cell voltage, when the mechanical load is in an active state, and/or increases the cell voltage, when the mechanical load is in an inactive state.

The invention provides a computer program comprising instructions that, upon being executed by a controller of a preferred energy storage module, carries out a preferred operating method, and/or, upon being executed by a controller of a preferred starter system, carries out a preferred starter method.

The invention provides a machine readable data storage medium or a data carrier signal comprising such a computer program.

While the invention is described with reference to a starter system for an engine, it should be noted that the ideas presented herein are applicable to energy storage modules in general and not only to the ones used as power supplies for starter motors.

Embodiments of the invention are described in more detail with reference to the accompanying schematic drawings that are listed below.
Fig. 1 depicts an embodiment of a starter system;
Fig. 2 depicts an embodiment of an energy storage module;
Fig. 3 depicts a time-cell temperature diagram to illustrate a first embodiment of a cell voltage adjustment;
Fig. 4 depicts a time-cell temperature diagram to illustrate a second embodiment of a cell voltage adjustment;
Fig. 5 depicts a cell temperature-cell voltage diagram to illustrate a third embodiment of a cell voltage adjustment.

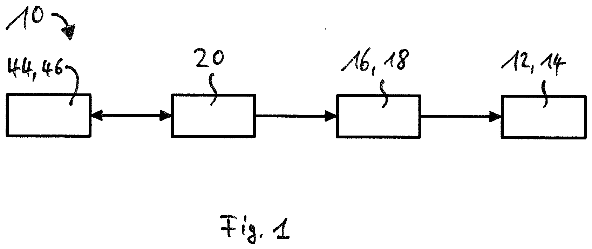

Referring to Fig. 1, a starter system 10 is described. The starter system 10 comprises a mechanical load 12. The mechanical load 12 preferably an engine 14 that requires a starting process, such as a typical internal combustion engine.

The starter system 10 comprises an electrical load 16 that is preferably an electrical starter motor 18. The electrical starter motor 18 is operatively coupled to the mechanical load 12 to activate the mechanical load 12, e.g. to start the engine 14.

The starter system 10 comprises an energy storage module 20 that is electrically coupled to the electrical load 18 for suppling the electrical load 18 with electrical power.

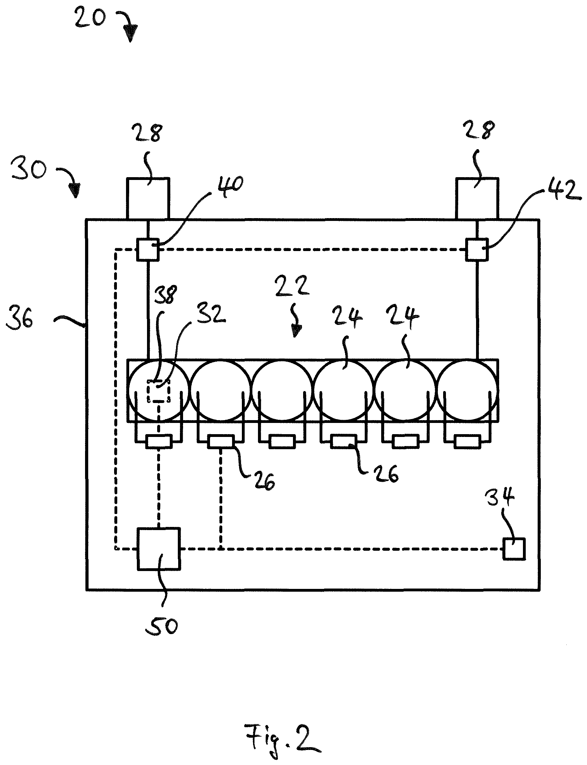

Referring to Fig. 2, the energy storage module 20 is described in more detail. The energy storage module 20 comprises an energy storage assembly 22 that includes a plurality of supercapacitor cells 24 for storing electrical energy.

The energy storage assembly 22 nominally operates at a voltage of 12 V, however, the actual operation voltage is typically from 9 V to 14.4 V in that case. There may be versions, where the energy storage assembly 22 nominally operates at 24 V, where the actual operation voltage is adapted accordingly.

The supercapacitor cells 24 are operated at comparably low voltages, e.g., from 1 V to 3 V so that the supercapacitor cells 24 are coupled together in groups which are connected in series or parallel to each other, in order to achieve the desired nominal operational voltage.

Each supercapacitor cell 24 is connected to a balancing resistor 26 that allows to selectively discharge individual supercapacitor cells 24. In a variant (not shown), a group of supercapacitor cells 24 or even all supercapacitor cells 24 are connected to a common balancing resistor.

The energy storage module 20 comprises output terminals 28, which allow the electrical load 18 to be coupled to the energy storage module 20. The energy storage assembly 22 is electrically connected to each output terminal 28.

The energy storage module 20 comprises a sensor apparatus 30. The sensor apparatus 30 is configured to detect or gather temperature data and/or electrical data.

The sensor apparatus 30 comprises a cell temperature sensor 32. The cell temperature sensor 32 is arranged in proximity of one supercapacitor cell 24. In a variant, more cell temperature sensors 32 can be installed to cover a larger amount of supercapacitor cells 24. It is also possible to have one cell temperature sensor 32 for each supercapacitor cell 24.

The sensor apparatus 30 comprises a housing temperature sensor 34. The housing temperature sensor 34 is arranged in the interior of an optional housing 36 of the energy storage module 20. The sensor apparatus 30 may also comprise an external temperature sensor (not shown) that is preferably arranged away and outside of the energy storage module 20, preferably in a larger compartment or room, where the energy storage module 20 can be installed.

The sensor apparatus 30 may include a cell voltage sensor 38 that is configured to measure the cell voltage of an individual supercapacitor cell 24. Preferably, each supercapacitor cell 24 has one cell voltage censor 38.

The sensor apparatus 30 may include a line voltage sensor 40 that is configured to measure the line voltage between the output terminals 28. The sensor apparatus 30 may include a line current sensor 42 that is configured to measure the line current that is flowing in or out of the output terminals 28.

The energy storage module 20 comprises a controller 50. The controller 50 is operatively coupled to the components of the energy storage module 20 to allow its operation that is described in more detail below.

The starter system 10 comprises a power source 44. The power source 44 can be a connection to the electrical grid or a battery 46, for example.

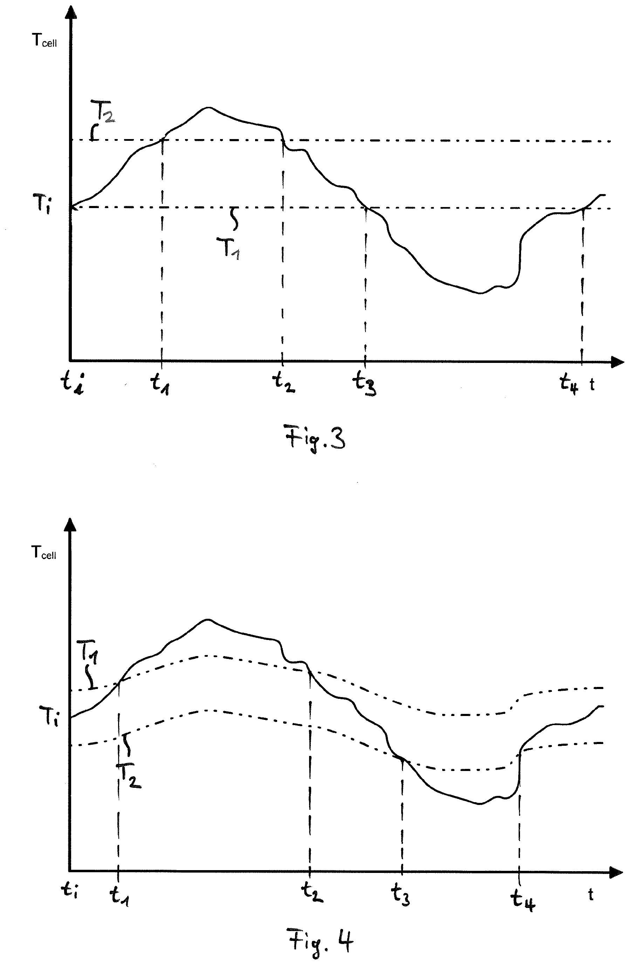

Referring to Fig. 3, the operation of the energy storage module 20 is explained in more detail.

The solid line illustrates the cell temperature T_{cell} measured by the cell temperature sensor 32 over time t. The controller 50 has defined a first threshold T₁ and a second threshold T₂ that is below the first threshold T₁.

Starting at an initial temperature T₁ at time tᵢ the controller 50 maintains a first cell voltage V₁ for the supercapacitor cells 24. When the cell temperature T_{cell} rises above the first threshold T₁ at time t₁, the first cell voltage V₁ is decreased by a predetermined voltage decrement ΔV_{dec} to a second cell voltage V₂ that is smaller than V₁, and the controller 50 maintains the second cell voltage V₂.

At time t₂, the cell temperature T_{cell} falls below the first threshold T₁. Preferably, the controller 50 increases the cell voltage V_{cell}, when the cell temperature T_{cell} falls below the first threshold T₁. Preferably, the second cell voltage V2 is increased by a predetermined voltage increment ΔV_{inc}, that can be the same as the predetermined voltage decrement ΔV_{dec}. In a variant the cell voltage V_{cell} is maintained at the second cell voltage V2 upon the cell temperature T_{cell} falling below the first threshold T₁.

At time t₃, the cell temperature T_{cell} falls below the second threshold T₂. In response the controller 50 increases the cell voltage V_{cell} by the predetermined voltage increment ΔV_{inc} to a third cell voltage V₃, which is maintained by the controller 50.

Similar to the previous description, the cell voltage V_{cell} can be decreased again, e.g., by the predetermined voltage decrement ΔV_{dec,} or can be maintained at the third cell voltage V₃, upon exceeding the second threshold T₂.

In addition to the above mentioned temperature control that is based on the cell temperature T_{cell}, the controller 50 may control the cell voltage V_{cell} based on other input data. The controller 50 may control the cell voltage V_{cell} based on the housing temperature measured by the housing temperature sensor 34 and/or the external temperature sensor. For each of these sensors, there may be separate first and second thresholds and/or voltage increments and decrements.

The controller 50 may also use the cell voltage sensor 38 to determine, whether the current cell voltage V_{cell} is sufficient to supply the electrical load 16. If the controller 50 determines that the cell voltage V_{cell} is insufficient to supply the electrical load 16 but not below a protective threshold, then the cell voltage V_{cell} is not yet adjusted. If the electrical load 16 sends a command, e.g., via a data connection or the controller 50 measures a sudden voltage drop, then the controller 50 adjusts the cell voltage V_{cell} in response to the demand by the electrical load 16, such that the electrical load is reliably supplied with electrical power. The controller 50 may log the event that the sudden voltage drop caused an increase in the cell voltage V_{cell}.

The starter system 10 operates as follows. If the mechanical load 12 is to be activated, an external signal initiates a starting sequence. The external signal may be manually or automatically operated. For example, the engine 14 is to be started up in response to an interruption of grid power to generate electricity.

In response to the external signal, the controller 50 prepares the energy storage module 20 for supplying electrical power to the electrical starter motor 18. The controller 50, if necessary, adjusts the cell voltage V_{cell} to supply the electrical starter motor 18, and, where necessary performs balancing. The controller 50 electrically connects the supercapacitor cells 34 to the electrical starter motor 18, thereby causing it to be energized and starting the engine 14. If the controller 50 determines that the engine 14 is running on its own, the controller 50 deenergizes the electrical starter motor 18 and may decrease the cell voltage V_{cell}. As long as the engine 14 is running, it may act as the power source 44 to also supply the energy storage module 10 in addition to providing electrical and/or mechanical power to other external loads.

Referring to Fig. 4, another embodiment of operation is described only insofar as it differs from the previously described operation. In this embodiment the first threshold T₁ and the second threshold T₂ are dependent on the cell temperature T_{cell} that is measured. Otherwise the operation of increasing or decreasing the cell voltage V_{cell} can be the same as previously described.

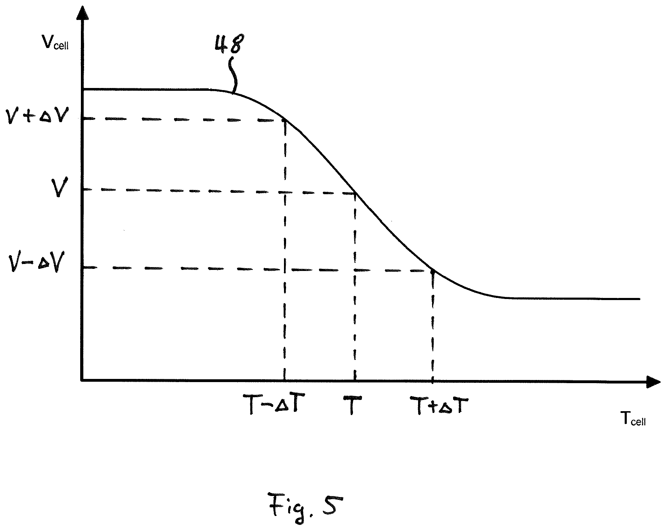

Referring to Fig. 5, another embodiment of operation is described in more detail. In this embodiment, the controller 50 determines the cell voltage V_{cell} based on temperature input, e.g., the cell temperature T_{cell}, the housing temperature, and/or the external temperature. The controller 50 may include a PID controller to determine the cell voltage V_{cell}.

Preferably, the controller 50 includes a look-up table that represents a dependence of the cell voltage V_{cell} on the cell temperature T_{cell}. A control curve 48 for this dependence can be determined experimentally or based on a simulation of the supercapacitor cells 24. The controller 50 then applies the cell voltage V_{cell} according to the control curve 48.

The control curve 48 may be depending on other factors, such as the environment, the state of the electrical load 18 and/or the mechanical load 12, and/or date/time etc. The controller 50 can override the control curve 48, if for example necessary due to a sudden voltage drop in order to reliably supply the electrical load 16.

In order to improve the lifetime of energy storage modules (20) based on supercapacitor cells (24) that are used in high-power applications, the invention proposes that the cell voltage (V_{cell}) of the supercapacitor cells (24) is adjusted based on a detected cell temperature (T_{cell}).

### List of reference signs:

- 10: starter system
- 12: mechanical load
- 14: engine
- 16: electrical load
- 18: electrical starter motor
- 20: energy storage module
- 22: energy storage assembly
- 24: supercapacitor cell
- 26: balancing resistor
- 28: output terminal
- 30: sensor apparatus
- 32: cell temperature sensor
- 34: housing temperature sensor
- 36: housing
- 38: cell voltage sensor
- 40: line voltage sensor
- 42: line current sensor
- 44: power source
- 46: battery
- 48: control curve
- 50: controller

## Claims

1. An energy storage module (20) for supplying power to an electrical load (16), the energy storage module (20) comprising:
- an energy storage assembly (22) comprising a plurality of supercapacitor cells (24) for storing electrical energy;
- a sensor apparatus (30) that includes at least one temperature sensor (32) arranged to detect a cell temperature (T_{cell}) of at least one of the supercapacitor cells (24); and
- a controller (50) that is configured to adjust a cell voltage (V_{cell}) of the supercapacitor cells (24) based on the detected cell temperature (T_{cell}).

2. The energy storage module (20) according to claim 1, wherein the controller (50) is configured to decrease the cell voltage (V_{cell}), when the cell temperature (T_{cell}) increases, and/or to increase the cell voltage (V_{cell}), when the cell temperature (T_{cell}) decreases.

3. The energy storage module (20) according to claim 2, wherein the controller (50) is configured to decrease the cell voltage (V_{cell}), when the cell temperature (T_{cell}) exceeds a first threshold (T₁) and/or to increase the cell voltage (V_{cell}), when the cell temperature (T_{cell}) falls below a second threshold (T₂) that is smaller than the first threshold (T₁), wherein optionally the controller (50) is configured to dynamically adjust the first threshold (T₁) and/or the second threshold (T₂) based on the cell temperature (T_{cell}), an environmental temperature outside the energy storage module (20), and/or a housing temperature within an interior space defined by a housing (36).

4. The energy storage module (20) according to any of the preceding claims, wherein the controller (50) is configured to adjust, increase, and/or decrease any of the cell voltage (V_{cell}), the first threshold (T₁), and/or the second threshold (T₂) in accordance with a predetermined control curve (48) that is indicative of the dependence of the cell voltage (V_{cell}) on the cell temperature (T_{cell}).

5. The energy storage module (20) according to any of the preceding claims, wherein the controller (50) is configured to decrease the voltage during a daytime period and/or to increase the voltage during a nighttime period, preferably by a predetermined voltage decrement (ΔV_{dec}) or voltage increment (ΔV_{inc}).

6. The energy storage module (20) according to any of the preceding claims, wherein the controller (50) is configured to monitor the cell voltage (V_{cell}) of at least one supercapacitor cell (24) and causes the supercapacitor cell (24) to be charged, when the cell voltage (V_{cell}) falls below a predetermined voltage level.

7. The energy storage module (20) according to any of the preceding claims, wherein the controller (50) is configured to measure a voltage drop during supplying the electrical load (16) with power from the supercapacitor cells (24), and to increase the cell voltage (V_{cell}), when the voltage drop exceeds a predetermined threshold.

8. The energy storage module (20) according to any of the preceding claims, wherein at least one supercapacitor cell (24) is electrically connected to a load balancing resistor (26), wherein the controller (50) is configured to selectively discharge the supercapacitor cell (24) via the balancing resistor (26).

9. The energy storage module (20) according to any of the preceding claims, further comprising a power source, preferably a battery, that is electrically connected to the supercapacitor cells (24), and the controller (50) is configured to control charging of the supercapacitor cells (24) from the power source.

10. The energy storage module (20) according to claim 9, further comprising a power converter, preferably an AC/DC converter or a DC/DC converter, that is electrically connected between the power source and the supercapacitor cells (24), and the controller (50) is configured to control the power converter for charging the supercapacitor cells (24) from the power source and/or for discharging the supercapacitor cells (24) to the power source.

11. A method for operating an energy storage module (20) according to any of the previous claims, the method comprising:
- storing electrical energy in a plurality of supercapacitor cells (24);
- detecting a cell temperature (T_{cell}) of at least one supercapacitor cell (24) by at least one temperature sensor; and
- adjusting a cell voltage (V_{cell}) of the supercapacitor cells (24) based on the detected cell temperature (T_{cell}) by a controller (50).

12. A starter system (10) for starting a mechanical load (12), preferably an engine (14), the system comprising an energy storage module (20) according to any of the preceding claims and an electrical starter motor (18) configured to start the mechanical load (12), wherein the starter motor is electrically coupled to the energy storage module (20) as the electrical load (16).

13. A method for operating a starter system (10) according to claim 12 for starting a mechanical load (12), preferably an engine (14), the method comprising performing a method according to claim 11; supplying a starter motor that is operatively coupled to the mechanical load (12) with electrical power from the supercapacitor cells (24).

14. A computer program comprising instructions that, upon being executed by a controller (50) of an energy storage module (20) according to any of the claims 1 to 10, carries out the method according to claim 11, and/or, upon being executed by a controller (50) of a starter system (10) according to claim 12, carries out the method according to claim 13.

15. A machine readable data storage medium or a data carrier signal comprising a computer program according to claim 14.
